# EUROPEAN PATENT APPLICATION

(11) **EP 1 426 883 A2**
(43) Date of publication of application: **09.06.2004**
(21) Application number: 03257339.6
(22) Date of filing: 20.11.2003
(51) Int. Cl.: G06F 17/30

(54) **A system and method for enabling communication between a web browser and a software agent infrastructure**

(30) Priority: 02.12.2002 GB 0227993
(71) Applicant: NCR INTERNATIONAL INC., Dayton, Ohio 45479 (US)
(72) Inventor: Ross, William D., Blairgowrie, Perthshire PH13 9NY (GB)
(74) Representative: Williamson, Brian

(57) **Abstract**

A script engine (18) for providing a communication channel between an internet browser (10) and a software agent based system (16). The script engine (18) is configured to receive a request from an internet browser page for data or functionality available from a software agent (16) and transmit the request to the agent (16). Once the agent (16) has processed the request, a response is sent to the script agent (18), which receives and transmits it to the browser (10) in a format that can be recognised thereby. If the response received from the agent (16) is in a suitable format it is passed directly to the browser (10) by the script engine (18). Otherwise, the script engine (18) translates the response or causes translation thereof before sending the response to the browser (10).

## Description

The present invention relates to a system and method for allowing access from a web or internet browser based application or website to a software agent.

When running an internet browser based application or website, it can be difficult to communicate with software agent systems. This is because agent infrastructures are generally insular and do not serve web content. At present, the only way to communicate information between a web browser and an agent system, is to add extra code to the browser either in-line or via a control object, such as OCX or Active-X. Doing this is, however, time consuming and disrupts the normal browser environment.

Some self-service banking applications for automated teller machines (ATMs) such as APTRA™ Edge use web pages to display banking information screens and collect input from the user. When the user selects an option such as display balance, this ultimately results in a new web page being loaded. To optimise the performance and the functionality of this type of banking service, it would be useful to be able to access services that are best provided in an agent environment.

An object of the invention is to provide an improved arrangement for allowing communication between a web browser and a remote software agent system or environment.

According to one aspect of the present invention there is provided a script engine adapted to provide a direct communication link between a web browser and a software agent.

The script engine is configured to receive a request from an internet browser page for data or functionality available from the agent and transmit notification of the request to the agent. The script engine may be adapted to transmit a response to the browser in a format that can be recognised thereby.

By having a script engine between the web browser and the agent infrastructure, a simple and effective method for establishing a communication link is provided, with the minimum of change and special code required within the browser environment.

The script engine may be configured to translate the request from the browser to a format that can be interpreted by the agent.

The script engine may be configured to receive a response from the agent.

The script engine may be configured to translate the agent response to a format that can be interpreted by the browser.

The agent may be configured to provide the response to the script engine in a format that can be interpreted by the browser.

The browser interpretable format may be html.

According to another aspect of the present invention, there is provided a method for communicating between a browser and a software agent, the method comprising receiving at a script engine a request from an internet browser page for data or functionality available from a software agent and transmitting the request from the script engine to the agent.

The method may further involve receiving a response at the script engine from the agent infrastructure; and transmitting the agent response from the script engine to the browser in a format that can be recognised thereby.

The method may involve translating the request from the browser to a format that can be interpreted by the agent.

The method may further involve translating the agent response to a format that can be interpreted by the browser.

This may be done by the agent or another dedicated translation agent or may be done by the script engine.

The format that may be interpreted by the browser may be html.

According to yet another aspect of the present invention there is provided a system/server for allowing communication between a web browser and a software agent, the system/server having means for receiving a request at a script engine from an internet browser page for data or functionality available from a software agent and means for transmitting the request from the script engine to the agent in a format that can be interpreted by the agent. The system may further comprise means for receiving a response at the script engine from the agent; and means for transmitting the response from the script engine to the browser in a format that can be recognised thereby.

According to still another aspect of the present invention, there is provided a terminal, such as a self-service terminal, for example an automated teller machine, that includes a script engine that is adapted to provide a direct link between a browser and a software agent infrastructure.

Preferably, the browser is configured to send a request for data or functionality available from the software agent to the script engine.

Preferably, the script engine is operable to translate the request from the browser to a format that can be interpreted by the agent and transmit the translated request to the agent.

Preferably, the script engine is adapted to receive a response from the agent infrastructure, and transmit the agent response to the browser in a format that can be recognised thereby.

According to a yet still further aspect of the present invention, there is provided a signal that is a product of the script engine and/or computer program and/or method and/or terminal of any of the preceding aspects of the invention.

According to a yet further aspect of the invention, there is provided a browser that includes a script engine as defined in the first aspect of the invention.

Various aspects of the invention will be described by way of example only and with reference to the accompanying drawings, of which:
Figure 1 is a diagrammatic view of a system for allowing communication between a browser and an agent infrastructure;
Figure 2 is a more detailed view of the system shown in Figure 1, and
Figure 3 is a flow diagram of steps for implementing web tracking using the systems of Figures 1 and 2.

The present invention provides a simple and effective mechanism for establishing a communications link between internet browsers and software agents, which mechanism exploits basic browser functionality. When Internet Explorer™ or a similar browser opens a web page containing a number of links and a link is selected by a user, it attempts to load the file or page within the selected link. Internet Explorer™ uses the file extension of the link to determine how to deal with the file/page. Selected file extensions indicate supported script languages such as PHP (www.php.net). Once the file extension has been identified as belonging to a scripting language, Internet Explorer™ passes the filename and any arguments to a script engine associated with that file extension, the script engine typically being a standalone executable. The script engine obtains the requested file and normally processes and translates it into HTML that the browser can understand and process. The invention exploits the in-built ability of browsers to communicate with script engines and uses this to provide a communication channel to software agent based systems. To this end, a new script engine is provided for processing a new custom file extension (say ".*ncr*").

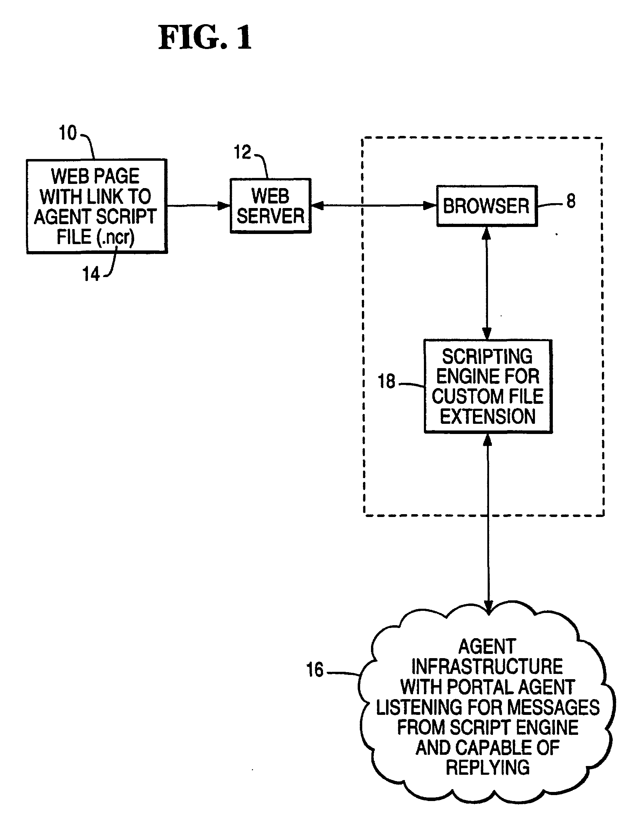

Figure 1 shows a browser 8 that is operable to display a web page 10 provided by a web server 12. The web page 10 has a link 14 to an agent script file that is provided in an agent infrastructure 16, typically a JAVA based infrastructure. The agent infrastructure 16 may be provided in the same user terminal as the browser or alternatively could be provided at a remote location. The link 14 is identified using a dedicated "agent" custom file with extension, for example ".ncr". All links having this extension require the use of services or functionality provided by the agent infrastructure 16.

Associated with the browser 8 is a standalone, executable script engine 18. This is configured to process links in the web page that have the dedicated custom file extension, i.e. ".ncr", and provide a direct communication link between the browser 8 and the agent infrastructure 16 when these links are selected. This script engine 18 has links into the agent infrastructure 16, for example via a peer2peer communication protocol. Alternatively, the script engine 18 could be a member of the infrastructure 16. In any case, the script engine 18 is adapted to communicate directly with the agent infrastructure 16.

To ensure that messages from the script engine 18 are received and acted on, included in the agent infrastructure 16 is a portal agent that is configured to listen for messages from the script engine 18 and is capable of replying.

The script engine 18 is adapted to communicate with the agent infrastructure 16 and pass back responses to requests from the browser 8 as formatted HTML. The agents 16 or the engine 18 itself may generate the HTML. More specifically, the script engine 18 is configured to receive a request from the webpage for data or functionality available from one or more agents in the infrastructure 16. This request is typically in html format. The browser request is then translated by the script engine 18 into a format that can be interpreted by the agent and transmitted thereto. The portal agent receives, recognises and identifies the translated message and directs it into the infrastructure 16.

Once received in the agent infrastructure 16, the translated request is acted on and a response is returned to the script engine 18, where it is translated into a format that can be interpreted by the browser, for example HTML. The browser interpretable response is then transmitted to the browser for display. The HTML returned by the script engine 18 could be, for example, a re-direct to a new web page. The address of this web page may be a parameter passed to the engine from the web page.

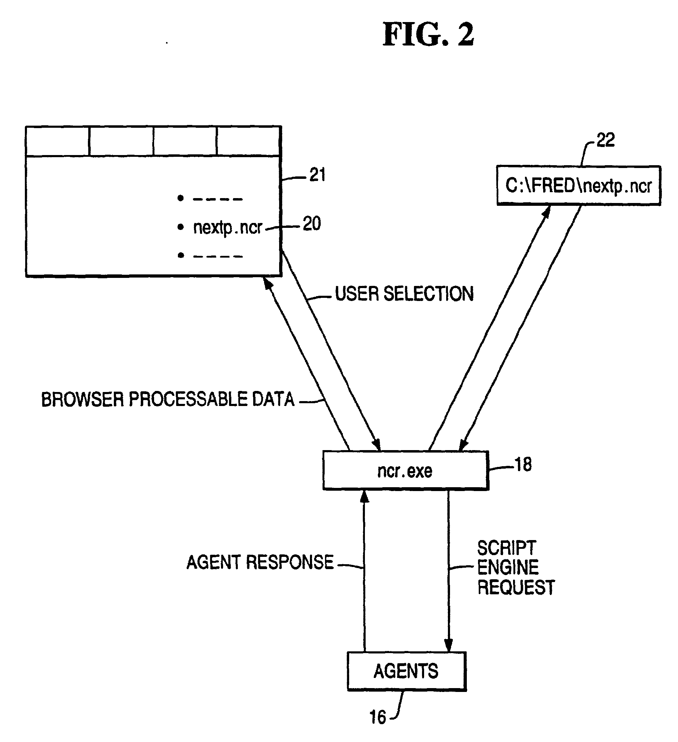

Figure 2 shows a more specific example of the steps taken when a link "nextp.ncr" 20 is provided in a menu of choices in a web page displayed in a web browser 21. When the user selects "*nextp.ncr*" 20, the browser 21 firstly identifies the relevant file. In the present case, the associated file is c:\Fred\nextp.ncr 22. This file may be a dummy or could also be a place, for example a file store that contains the address of a page to be displayed next or a program for carrying some type of processing or functionality. For example, the file 22 could include instructions to interrogate and provide information from a database. Other relevant data could also be in the *.ncr* file.

Once the browser 21 identifies the file 22, details of this are passed to the script engine 18 (shown in Figure 2 as "ncr.exe") . The script engine 18 then reads the fileand does one or more of several things. For example, the file 22 may merely be data content entered into the web page by the user, in which case that data may be translated by the script engine 18 into an agent interpretable format and passed directly to the agent infrastructure 16. If the file 22 includes instructions, the script engine 18 may carry out those instructions or cause the file 22 to carry out those instructions and pass the result to the agents for further processing or the script agent 18 may translate the entire file 22 into an agent interpretable format and pass it directly to the agent infrastructure 16. Of course, the file 22 may include functionality as well as content entered by the user, in which case the entire file 22 including, say, instructions that have to be followed and content, is sent to the agent infrastructure 16. Alternatively, the file 22, which may include or consist solely of content added by the user, may be processed to generate a new file for sending to the agents. In any event, the script engine 18 interprets the file 22 and calls the agent system 16 to inform the agents of the user choice.

As a specific example, the browser 21, with the script engine 16, may be provided in a self-service terminal, such as an automated teller machine (ATM). The link selected by the user could be a request to display their personal banking details. In this case, the file 22 associated with the link may indicate that the next page to be displayed is a web page to which user specific banking data has to be added, e.g. *Resultscreen.html.* This page may be a template page that has to be completed with the user's banking details. These banking details can be accessed and used by the agent infrastructure 16. The script engine 18 is adapted to recognise the file and understand the information needed, in this specific example the user's bank details. The script engine 18 then constructs an appropriate request for that information and sends it to the agent system 16.

Once the message is received from the script engine 18 at the agent system 16, it is processed and a response is returned to the script engine 18. This response includes the results data that is needed to provide the user with the banking information requested. The script engine 18 processes the results data to ensure that it is in a format that is interpretable by the browser 21, for example html. If the data returned by the agent infrastructure is not in a suitable format, the script engine 18 translates it. Otherwise, no translation step is needed. In either case, the script engine 18 returns to the browser 21 the results screen *ResultScreen.html* completed by adding the result set. The browser then displays the completed *ResultScreen.html*. In this way, the user is presented, via the browser, with banking details that were processed using the agent infrastructure.

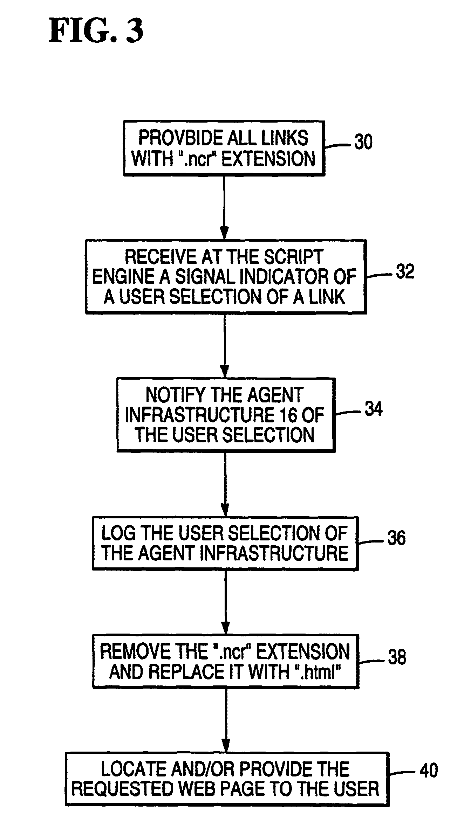

The script engine 18 in which the invention is embodied is flexible and can be used to provide extended functionality. As a simple example, the script engine 18 in combination with the agent infrastructure 16 could be used to implement a tracking system for monitoring web pages visited by a user. Figure 3 shows the steps for doing this.

In order to implement tracking within a given web site, all links have the dedicated agent extension, i.e. ".ncr", instead of the standard ".html" extension 30. Each time a new link is selected within the site, a signal indicative of the new selection is sent to the script engine 18, which in turn sends details of the new selection to the agent infrastructure 16. Included within the agent infrastructure 16 is functionality for logging requests for new web pages. Hence, each time a request for a new page is made, the agent infrastructure 16 logs this 36 so that movement around the web site can be tracked. Once the agent 16 has been notified of the request for a new page, the script engine 18 is adapted to remove 38 the ".ncr" extension. The script engine 18 then replaces the ".ncr" extension with the standard ".html" extension 30. The requested page is then found and presented to the user 40 in a standard manner. In this way, there is provided a very simple mechanism for tracking how users navigate around the site, without interfering with the site functionality.

The script engine in which the invention is embodied offers a standard way of communicating to an agent infrastructure using techniques supported by the browser software. Because the script engine returns data that can be interpreted by the browser, such as HTTP data, it can easily provide dynamic content, capture data and direct web page flow. The implementation imposes minimum workload on the web page author with most work being done in the scripting engine.

A skilled person will appreciate that variations of the disclosed arrangements are possible without departing form the invention. Accordingly, the above description of a specific embodiment is made by way of example only and not for the purposes of limitation. It will be clear to the skilled person that minor modifications may be made without significant changes to the operation described.

## Claims

1. A script engine adapted to provide a direct communication link between a web browser and a software agent.

2. A script engine as claimed in claim 1 configured to receive a request from the browser for data or functionality available from the software agent and transmit the request to the agent.

3. A script engine as claimed in claim 2 further configured to receive a response from the agent, and transmit the response to the browser in a format that can be recognised thereby.

4. A script engine as claimed in any of the preceding claims configured to translate the request from the browser to a format that can be interpreted by the agent.

5. A script engine as claimed in any of the preceding claims configured to translate the agent response to a format that can be interpreted by the browser.

6. A script engine as claimed in any of the preceding claims, wherein the agent is configured to provide the response to the script engine in a format that can be interpreted by the browser.

7. A script engine as claimed in any of the preceding claims, wherein the format interpretable by the browser is HTML.

8. A computer program, preferably on a data carrier or computer readable medium, for providing a communication channel between an internet browser and a software agent based system, the computer program having code or instructions for: receiving a request from an internet browser for data or functionality available from a software agent; and transmitting the request to the agent.

9. A computer program as claimed in claim 8, further comprising code or instructions for receiving a response from the agent, and transmitting the response to the browser in a format that can be recognised thereby.

10. A computer program as claimed in claim 8 or claim 9, further comprising code or instructions for translating the request from the browser to a format that can be interpreted by the agent

11. A computer program as claimed in claim 9 or claim 10, further comprising code or instructions for translating the agent response to a format that can be interpreted by the browser.

12. A method of communicating between a browser and a software agent, the method comprising receiving a request from an internet browser page for data or functionality available from a software agent and transmitting the translated request to the agent.

13. A method as claimed in claim 12 further comprising code or instructions for receiving a response from the agent infrastructure and transmitting the agent response to the browser in a format that can be recognised thereby.

14. A method as claimed in claim 12 or claim 13 further comprising translating the request from the browser to a format that can be interpreted by the agent.

15. A method as claimed in claim 13 or claim 14 further comprising translating the agent response to a format that can be interpreted by the browser.

16. A method as claimed in claim 15, wherein the step of translating is done by the agent or another dedicated translation agent or by the script engine.

17. A method as claimed in any of claims 12 to 16, wherein the browser interpretable format is html.

18. A terminal, such as a self-service terminal, for example an automated teller machine, that includes a script engine as claimed in any of claims 1 to 7.

19. A signal that is or includes information that is a product of the script engine and/or computer program and/or method and/or system and/or terminal of any of the preceding claims.

20. A browser that includes a script engine as defined in any of claims 1 to 6.

21. A script engine substantially as described hereinbefore with reference to the accompanying drawings.

22. A method substantially as described hereinbefore with reference to the accompanying drawings.

23. A computer program substantially as described hereinbefore with reference to the accompanying drawings.

24. A browser substantially as described hereinbefore with reference to the accompanying drawings.
